# EUROPÄISCHE PATENTSCHRIFT

(11) **EP 0 718 157 B1**
(45) Veröffentlichungstag und Bekanntmachung des Hinweises auf die Patenterteilung: **24.03.1999**
(21) Anmeldenummer: 95810776.5
(22) Anmeldetag: 08.12.1995
(51) Int. Cl.: B60R 19/18, B60J 5/04, B62D 21/15, F16F 7/12

(54) **Stossstange für Fahrzeuge**
Bumper for vehicles
Pare-chocs pour véhicules

(30) Priorität: 23.12.1994 CH 3927/94; 13.04.1995 CH 1082/95
(43) Veröffentlichungstag der Anmeldung: 26.06.1996
(73) Patentinhaber: Alusuisse Technology & Management AG, 8212 Neuhausen am Rheinfall (CH)
(72) Erfinder: Frank, Simon, D-78250 Watterdingen (DE); Graf, Werner, D-78234 Engen (DE)

(56) Entgegenhaltungen:
- EP-A- 0 249 518
- EP-A- 0 418 923
- DE-A- 3 636 030
- DE-A- 4 306 824
- DE-A- 4 307 837
- US-A- 4 320 913
- US-A- 4 563 028
- US-A- 5 201 912
- US-A- 5 340 178
- PATENT ABSTRACTS OF JAPAN vol. 18, no. 479 (M-1669), 7.September 1994 & JP-A-06 156167 (TOYOTA MOTOR CORP.), 3.Juni 1994,
- PATENT ABSTRACTS OF JAPAN vol. 18, no. 449 (M-1660), 22.August 1994 & JP-A-06 142754 (FURUKAWA ALUM CO LTD), 24.Mai 1994,
- PATENT ABSTRACTS OF JAPAN vol. 18, no. 424 (M-1652), 9.August 1994 & JP-A-06 127428 (KOBE STEEL LTD), 10.Mai 1994,

## Beschreibung

Die Erfindung betrifft eine Stossstange für Fahrzeuge nach dem Oberbegriff der Ansprüche 1, 2 oder 6.

Stossstangen-Profile der eingangs erwähnten Art haben den bekannten Vorzug geringen Gewichtes. Als nachteilig hat sich jedoch ihre geringe Formhaltigkeit bei Deformation während eines starken Aufpralls erwiesen. Eine Stossstange nach dem Oberbegriff der Ansprüche 1, 2 oder 6 ist aus JP-A-0 615 6167 bekannt.

DE-A-4306824 offenbart einen Aufprallträger mit zwei parallelen Wandelementen und einer zu diesen parallelen Zwischenwand. Die Wandelemente sind über Zwischenstege miteinander verbunden, wobei in einer Ausführungsform die Wanddicke der Verbindungstege von der Zwischenwand zu einem ersten Wandelement grösser ist als die Wanddicke der Verbindungsstege von der Zwischenwand zu einem zweiten Wandelement. Zur Anpassung an die Einbaumasse kann die Breite des Aufprallträgers durch Einbringen von längslaufenden Falten in die Zwischenstege verringert werden.

Angesichts dieser Gegebenheiten hat sich der Erfinder die Aufgabe gestellt, eine Stossstange der eingangs erwähnten Art zu schaffen, die bei geringem Gewicht ein hohes Mass an Formhaltigkeit bei ausreichendem Kompensationsvermögen für die auftreffende Verformungsenergie aufweist. Zudem sollen Herstellung und Handhabung des Stossstangen-Profiles sehr einfach sein.

Zur erfindungsgemässen Lösung der Aufgabe führen die Merkmale der Ansprüche 1, 2 oder 6.

Die Erfindung weiterbildende Merkmale sind Gegenstand von abhängigen Patentansprüchen.

Die erfindungsgemässe Querschnittsform führt zu einer im Vergleich zu Stossstangen nach dem Stand der Technik verbesserten Vernichtung der auftreffenden Verformungsenergie. Der zwischen dem Druckgurt und dem Zuggurt angeordnete Vertikalsteg unterteilt das Hohlprofil in zwei Verformungszonen. Das eine (primäre bzw. sekundäre) Verformungsteil nimmt hier zunächst die auf die Stossstange auftreffende Aufprallenergie durch Verformung auf, während das andere (sekundäre bzw. primäre) Verformungsteil noch während einer gewissen Zeit eine Reststabilität aufweist und so zur Formhaltigkeit beiträgt.

Der vorstehend erwähnte Effekt wird durch die nachfolgend beschriebenen Massnahmen noch verstärkt:
- Die Dicke der Querwände und/oder der Querstege im primären Verformungsteil wird grösser oder kleiner gewählt als deren entsprechende Dicke im sekundären Verformungsteil.
- Die Querwände und/oder die Querstege im primären oder im sekundären Verformungsteil werden um ein Mass ausgebaucht.
- An die Kammern des sekundären Verformungsteils schliesst eine die Höhe des Druckgurtes vergrössernde Zusatzkammer an. Diese kann integral mit dem Stossstangen-Profil stranggepresst sein. Die Zusatzkammer kann aber auch über einen Seitenwandstreifen mit Auskragungen, die in entsprechende, von an der Querwand angeformten Winkelstegen gebildeten Nuten eingreifen, mit dem Stossstangen-Profil lösbar verbunden sein. Bevorzugt ist die Zusatzkammer im Bereich des Auftreffpunktes der senkrechten Projektionslinie des vom Zuggurt am weitesten entfernten Bereichs des Druckgurtes auf dem Zuggurt angeordnet, d.h. die Zusatzkammer liegt in der Verlängerung desjenigen Bereichs, der bei einem Aufprall zuerst verformt wird.

Bei einer weiteren bevorzugten Ausführungsform der erfindungsgemässen Stossstange sind die Querstege unter Bildung eines Versetzungsmasses am Vertikalsteg in Teilstege aufgeteilt. Hierbei ist nur wesentlich, dass die Querstege nicht von einer Profilwand zur andern durchgehend sind. Die Anzahl der Teilstege im primären Verformungsteil kann demzufolge auch grösser oder kleiner sein als die Anzahl der Teilstege im sekundären Verformungsteil.

Durch die versetzt zueinander angeordneten Teilstege wird bei einem Aufprall zunächst eine Verdrehung im Bereich der Versetzung eingeleitet, die mit fortschreitender Deformation der Stossstange zu weiteren Biegeverformungen führt. Dadurch kann die auftreffende Verformungsenergie praktisch bis zum Ende des Verformungsvorganges durch Biegeverformungen aufgenommen werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 die Draufsicht auf eine Stossstange;
- Fig. 2 den Querschnitt durch die Stossstange von Fig. 1 nach deren Linie I-I;
- Fig. 3 den Querschnitt durch eine zweite Ausführungsform einer Stossstange;
- Fig. 4 den Querschnitt durch eine dritte Ausführungsform einer Stossstange;
- Fig. 5 den Querschnitt durch eine vierte Ausführungsform einer Stossstange;
- Fig. 6 den Querschnitt durch eine fünfte Ausführungsform einer Stossstange;
- Fig. 7 den Querschnitt durch die Stossstange von Fig. 6 nach deren Verformung.

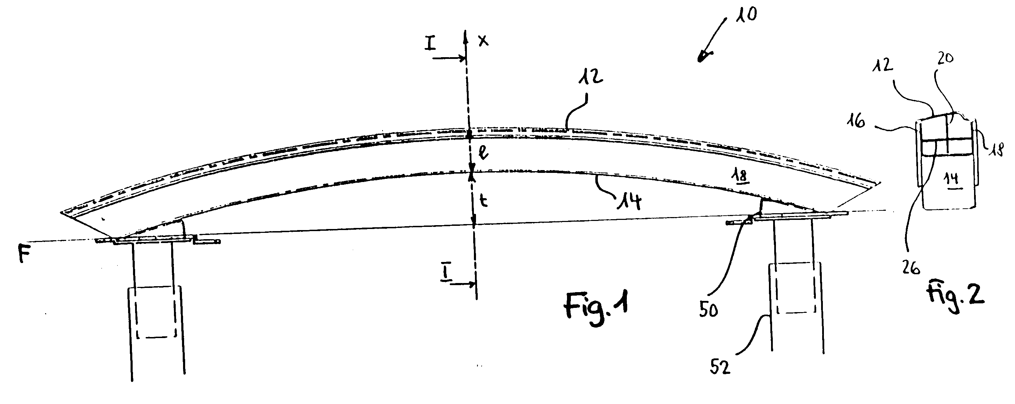

Eine in Fig. 1 dargestellte Stossstange 10 eines aus Gründen der besseren Uebersicht nicht wiedergegebenen Personenkraftwagens ist über Halterungen 50 an Fahrzeuglängsträgern 52 befestigt. Die Stossstange 10 ist als Aluminiumprofil stranggepresst und gegenüber einer gedachten Frontlinie F des Personenkraftwagens mittig um ein Mass t ausgebaucht.

Die Stossstange 10 weist gemäss Fig. 1 bis 4 zwei in Abstand l zueinander stehende Profilwände 12, 14 auf, die durch Querwände 16, 18 zu einem kastenförmigen Hohlprofil ergänzt sind. In Einbaulage entspricht die vom Fahrzeug wegweisende Profilwand 12 dem einen Stoss aufnehmenden Aussengurt bzw. Druckgurt, die gegen das Fahrzeug gerichtete Profilwand 14 dem Innengurt bzw. Zuggurt.

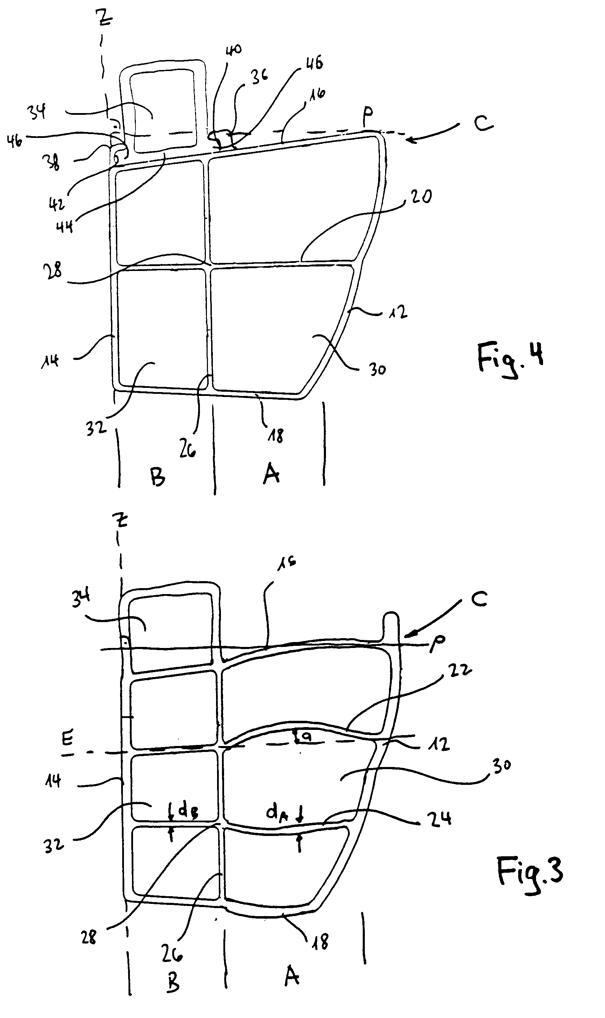

In Fig. 1 und 4 ist mittig zwischen den beiden Querwänden 16, 18 ein die Profilwände 12, 14 verbindender Quersteg 20 angeordnet, der unter Bildung einer Knotenlinie 28 von einem die Querwände 16, 18 miteinander verbindenden Vertikalsteg 26 geschnitten wird. Das kastenförmige Hohlprofil der Stossstange 10 wird durch den mittigen Quersteg 20 und den Vertikalsteg 26 in Kammern 30, 32 unterteilt. Hierbei bilden die zwischen dem Druckgurt 12 und dem Vertikalsteg 26 liegenden Kammern 30 ein primäres Verformungsteil A, die zwischen dem Vertikalsteg 26 und dem Zuggurt 14 liegenden Kammern 32 ein sekundäres Verformungsteil B.

In der in Fig. 3 gezeigten Ausführungsform einer Stossstange ist das sekundäre Verformungsteil B um eine Zusatzkammer 34 erweitert. Diese Zusatzkammer 34 ist im Bereich des Auftreffpunktes der senkrechten Projektionslinie p des vom Zuggurt 14 am weitesten entfernten Bereichs des Druckgurtes 12 auf der Zuggurtfläche Z angeordnet. Bei dieser Variante sind anstelle eines mittigen Quersteges zwei Querstege 22, 24 in gleichmässigem Abstand zu den Querwänden 16, 18 zwischen Druckgurt 12 und Zuggurt 14 vorhanden. Die Querwände 16, 18 sowie die Querstege 22, 24 sind jeweils im primären Verformungsteil A um ein Mass a gegenüber einer gedachten Querstegebene E ausgebaucht. Zusätzlich oder alternativ zu diesen Ausbauchungen kann die Dicke d_{A} der Querwände 16, 18 bzw. Querstege 22, 24 im primären Verformungsteil A kleiner gewählt werden als die Dicke d_{B} der Querwände bzw. Querstege im sekundären Verformungsteil B.

Bei weiteren möglichen Ausführungsformen ist das sekundäre Verformungsteil B gegenüber dem primären Verformungsteil A geschwächt, indem die Ausbauchungen der Querwände 16, 18 sowie der Querstege 22, 24 im sekundären Verformungsteil B vorhanden sind und/oder die Dicke d_{B} der Querwände 16,18 bzw. Querstege 22, 24 im sekundären Verformungsteil B kleiner gewählt wird als die Dicke d_{A} der Querwände bzw. Querstege im primären Verformungsteil A.

Bei der in Fig. 4 gezeigten Ausführungsform einer Stossstange ist die Zusatzkammer 34 im sekundären Verformungsteil B lösbar mit dem stranggepressten Stossstangenprofil verbunden. Hierzu sind an der Querwand 16 Winkelstege 36, 38 mit einander zugekehrten Nuten 40, 42 angeformt. In diese Nuten 40, 42 greift ein Seitenwandstreifen 44 der Zusatzkammer 34 mit seinem Auskragungen 46 ein.

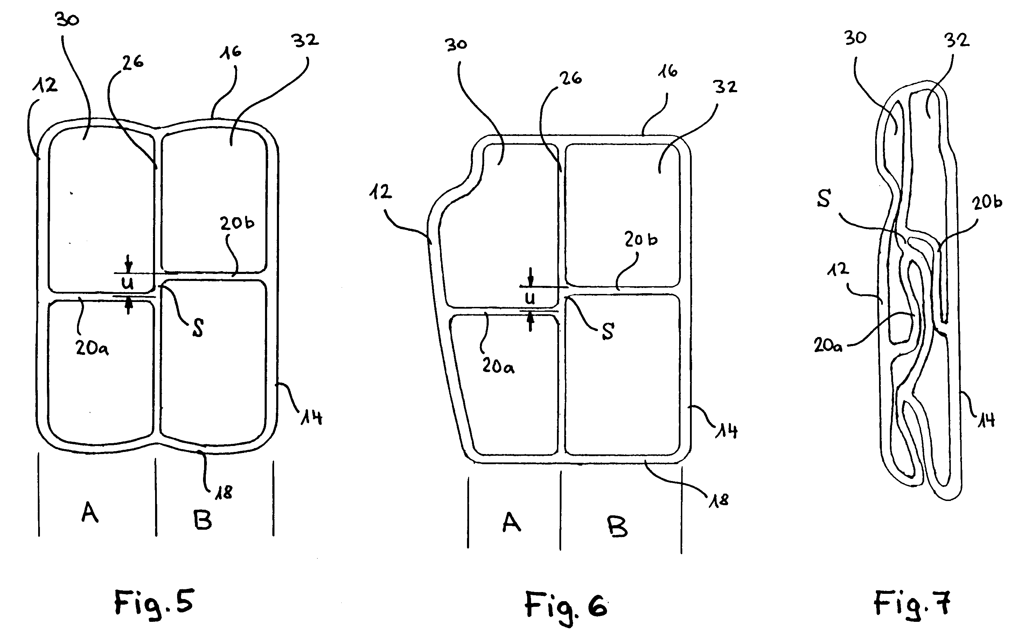

Bei den Ausführungsformen nach Fig. 5 und 6 ist -- im Gegensatz zu den vorangehenden Beispielen mit durchgehenden Querstegen -- der mittige Quersteg 20 unter Bildung eines Versetzungsmasses u am Vertikalsteg 26 in zwei Teilstege 20a,b unterteilt. Aus Fig. 7 ist erkennbar, dass bei einem Aufprall im Bereich S des Vertikalsteges 26 zwischen den Teilstegen 20a,b zunächst eine Verdrehung eingeleitet wird, die zu weiteren Biegeverformungen führt, so dass insgesamt mehr Verformungsenergie aufgenommen werden kann als dies bei durchgehenden Querstegen 20, 22 oder 24 der Fall ist.

Es sei hier noch erwähnt, dass die Stossstange nicht notwendigerweise gekrümmt sein muss. Ebenso kann die Gestalt und die Winkellage des Druckgurtes 12 in bezug auf den Zuggurt 14 in weiten Grenzen variieren und richtet sich im wesentlichen nach den ästhetischen Wünschen des Designers. Bei der Endkonfektionierung der Stossstangen werden diese zudem ganz oder teilweise mit einer Kunststoffschale umhüllt.

## Patentansprüche

1. Stossstange für Fahrzeuge, insbesondere für Personenkraftwagen, mit einem aus einer Leichtmetallegierung stranggepressten Profil, das am Fahrzeug festlegbar ist und mit in Abstand (l) zueinander als Druckgurt (12) bzw. Zuggurt (14) angeordneten Profilwänden (12,14) sowie einem Paar sie verbindender Querwände (16,18) ein Hohlprofil bildet, wobei zwischen den Querwänden (16, 18) zumindest ein Quersteg (20,22,24) angeordnet ist, der die beiden Profilwände (12,14) miteinander verbindet und daß Hohlprofil in Kammern unterteilt, und wobei zwischen den Profilwänden (12,14) ein Vertikalsteg (26) angeordnet ist, der die beiden Querwände (16,18) miteinander verbindet sowie das Hohlprofil in ein primäres Verformungsteil (A) mit an den Druckgurt (12) angrenzenden Kammern (30) und in ein sekundäres Verformungsteil (B) mit an den Zuggurt (14) angrenzenden Kammern (32) unterteilt,
dadurch gekennzeichnet, dass
die Querwände (16,18) und/oder die Querstege (20,22,24) im primären Verformungsteil (A) oder im sekundären Verformungsteil (B) um ein Mass (a) ausgebaucht sind.

2. Stossstange für Fahrzeuge, insbesondere für Personenkraftwagen, mit einem aus einer Leichtmetallegierung stranggepressten Profil, das am Fahrzeug festlegbar ist und mit in Abstand (l) zueinander als Druckgurt (12) bzw. Zuggurt (14) angeordneten Profilwänden (12,14) sowie einem Paar sie verbindender Querwände (16,18) ein Hohlprofil bildet, wobei zwischen den Querwänden (16,18) zumindest ein Quersteg (20,22,24) angeordnet ist, der die beiden Profilwände (12,14) miteinander verbindet und daß Hohlprofil in Kammern unterteilt, und wobei zwischen den Profilwänden (12,14) ein Vertikalsteg (26) angeordnet ist, der die beiden Querwände (16,18) miteinander verbindet sowie das Hohlprofil in ein primäres Verformungsteil (A) mit an den Druckgurt (12) angrenzenden Kammern (30) und in ein sekundäres Verformungsteil (B) mit an den Zuggurt (14) angrenzenden Kammern (32) unterteilt,
dadurch gekennzeichnet, dass
an die Kammern (32) des sekundären Verformungsteils (B) eine die Höhe des Druckgurtes (14) vergrössernde Zusatzkammer (34) anschliesst.

3. Stossstange nach Anspruch 2, dadurch gekennzeichnet, dass die Zusatzkammer (34) integral mit dem Stossstangen-Profil stranggepresst ist.

4. Stossstange nach Anspruch 2, dadurch gekennzeichnet, dass die Zusatzkammer (34) über einen Seitenwandstreifen (44) mit Auskragungen (46), die in entsprechende, von an der Querwand (16) angeformten Winkelstegen (36,38) gebildeten Nuten (40,42) eingreifen, mit dem Stossstangen-Profil lOsbar verbunden ist.

5. Stossstange nach einem der Ansprüche 3 oder 4, dadurch gekennzeichnet, dass die Zusatzkammer (34) im Bereich des Auftreffpunktes der senkrechten Projektionslinie (p) des vom Zuggurt (14) am weitesten entfernten Bereichs (C) des Druckgurtes (12) auf dem Zuggurt (14) angeordnet ist.

6. Stossstange für Fahrzeuge, insbesondere für Personenkraftwagen, mit einem aus einer Leichtmetallegierung stranggepressten Profil, das am Fahrzeug festlegbar ist und mit in Abstand (l) zueinander als Druckgurt (12) bzw. Zuggurt (14) angeordneten Profilwänden (12,14) sowie einem Paar sie verbindender Querwände (16,18) ein Hohlprofil bildet, wobei zwischen den Querwänden (16,18) zumindest ein Quersteg (20,22,24) angeordnet ist, der die beiden Profilwände (12,14) miteinander verbindet und daß Hohlprofil in Kammern unterteilt, und wobei zwischen den Profilwänden (12,14) ein Vertikalsteg (26) angeordnet ist, der die beiden Querwände (16,18) miteinander verbindet sowie das Hohlprofil in ein primäres Verformungsteil (A) mit an den Druckgurt (12) angrenzenden Kammern (30) und in ein sekundäres Verformungsteil (B) mit an den Zuggurt (14) angrenzenden Kammern (32) unterteilt,
dadurch gekennzeichnet, dass
die Querstege (20,22,24) durch den Vertikalsteg (26) in Teilstege (20a,b) aufgeteilt sind, und dass diese Teilstege (20a,b) um ein Mass (u) am Vertikalsteg (26) versetzt sind.

7. Stossstange nach Anspruch 6, dadurch gekennzeichnet, dass die Anzahl der Teilstege (20a) im primären Verformungsteil (A) grösser oder kleiner als die Anzahl der Teilstege (20b) im sekundären Verformungsteil (B) ist.

## Claims

1. Bumper for vehicles, in particular for passenger cars, comprising a profile extruded from a light metal alloy which can be fixed to the vehicle and forms a hollow profile by means of profile walls (12, 14) in the form of a compression member (12) and a tension member (14) arranged at a distance (l) from one another and a pair of transverse walls (16, 18) connecting them together, at least one transverse web (20, 22, 24) connecting the two profile walls (12, 14) together and dividing the hollow profile into chambers being arranged between the transverse walls (16, 18), and a vertical web (26) connecting the two transverse walls (16, 18) together and dividing the hollow profile into a primary deformation part (A) with chambers (30) adjoining the compression member (12) and a secondary deformation part (B) with chambers (32) adjoining the tension member (14) being arranged between the profile walls (12, 14), characterised in that the transverse walls (16, 18) and/or the transverse webs (20, 22, 24) bulge out by an amount (a) in the primary deformation part (A) or in the secondary deformation part (B).

2. Bumper for vehicles, in particular for passenger cars, comprising a profile extruded from a light metal alloy which can be fixed to the vehicle and forms a hollow profile by means of profile walls (12, 14) in the form of a compression member (12) and a tension member (14) arranged at a distance (l) from one another and a pair of transverse walls (16, 18) connecting them together, at least one transverse web (20, 22, 24) connecting the two profile walls (12, 14) together and dividing the hollow profile into chambers being arranged between the transverse walls (16, 18), and a vertical web (26) connecting the two transverse walls (16, 18) together and dividing the hollow profile into a primary deformation part (A) with chambers (30) adjoining the compression member (12) and a secondary deformation part (B) with chambers (32) adjoining the tension member (14) being arranged between the profile walls (12, 14), characterised in that an additional chamber (34) increasing the height of the compression member (14) is added to the chambers (32) of the secondary deformation part (B).

3. Bumper according to claim 2, characterised in that the additional chamber (34) is extruded integrally with the bumper profile.

4. Bumper according to claim 2, characterised in that the additional chamber (34) is releasably connected to the bumper profile by means of a side wall strip (44) with projections (46) engaging in corresponding grooves (40, 42) formed by angular webs (36, 38) moulded on to the transverse wall (16).

5. Bumper according to one of claims 3 or 4, characterised in that the additional chamber (34) is arranged in the region of the point at which the vertical projection line (p) of the region (C) of the compression member (12) furthest away from the tension member (14) meets the tension member (14).

6. Bumper for vehicles, in particular for passenger cars, comprising a profile extruded from a light metal alloy which can be fixed to the vehicle and forms a hollow profile by means of profile walls (12, 14) in the form of a compression member (12) and a tension member (14) arranged at a distance (l) from one another and a pair of transverse walls (16, 18) connecting them together, at least one transverse web (20, 22, 24) connecting the two profile walls (12, 14) together and dividing the hollow profile into chambers being arranged between the transverse walls (16, 18), and a vertical web (26) connecting the two transverse walls (16, 18) together and dividing the hollow profile into a primary deformation part (A) with chambers (30) adjoining the compression member (12) and a secondary deformation part (B) with chambers (32) adjoining the tension member (14) being arranged between the profile walls (12, 14), characterised in that the transverse webs (20, 22, 24) are divided into partial webs (20a, b) by the vertical web (26) and that these partial webs (20a, b) are offset by an amount (u) on the vertical web (26).

7. Bumper according to claim 6, characterised in that the number of partial webs (20a) in the primary deformation part (A) is larger or smaller than the number of partial webs (20b) in the secondary deformation part (B).

## Revendications

1. Pare-chocs pour véhicules, en particulier pour des voitures particulières, comportant un profilé extrudé en alliage de métal léger qui est susceptible d'être fixé sur le véhicule et qui forme un profilé creux conjointement avec des parois profilées (12, 14) agencées à une distance (l) l'une de l'autre sous forme d'un brin comprimé (12) ou d'un brin tendu (14) et avec une paire de parois transversales (16, 18) qui les relient, au moins un voile transversal (20, 22, 24) étant agencé entre les parois transversales (16, 18), lequel relie les deux parois de profilé (12, 14) et subdivise le profilé creux en chambres, et un voile vertical (26) étant agencé entre les parois de profilé (12, 14), lequel relie mutuellement les deux parois transversales (16, 18) et subdivise le profilé creux en une partie déformable primaire (A) comportant des chambres (30) adjacentes au brin comprimé (12), et en une partie déformable secondaire (B) comportant des chambres (32) adjacentes au brin tendu (14), caractérisé en ce que les parois transversales (16, 18) et/ou les voiles transversaux (20, 22, 24) dans la partie déformable primaire (A) ou dans la partie déformable secondaire (B) sont bombé(e)s d'une valeur (a).

2. Pare-chocs pour véhicules, en particulier pour des voitures particulières, comportant un profilé extrudé en alliage de métal léger qui est susceptible d'être fixé sur le véhicule et qui forme un profilé creux conjointement avec des parois profilées (12, 14) agencées à une distance (l) l'une de l'autre sous forme d'un brin comprimé (12) ou d'un brin tendu (14) et avec une paire de parois transversales (16, 18) qui les relient, au moins un voile transversal (20, 22, 24) étant agencé entre les parois transversales (16, 18), lequel relie les deux parois de profilé (12, 14) et subdivise le profilé creux en chambres, et un voile vertical (26) étant agencé entre les parois de profilé (12, 14), lequel relie mutuellement les deux parois transversales (16, 18) et subdivise le profilé creux en une partie déformable primaire (A) comportant des chambres (30) adjacentes au brin comprimé (12), et en une partie déformable secondaire (B) comportant des chambres (32) adjacentes au brin tendu (14), caractérisé en ce qu'aux chambres (32) de la partie déformable secondaire (B) se raccorde une chambre additionnelle (34) qui augmente la hauteur du brin comprimé (14).

3. Pare-chocs selon la revendication 2, caractérisé en ce que la chambre additionnelle (34) est extrudée de façon intégrée avec le profilé de pare-chocs.

4. Pare-chocs selon la revendication 2, caractérisé en ce que la chambre additionnelle (34) est reliée de façon détachable au profilé de pare-chocs par l'intermédiaire d'une bande de paroi latérale (44) comprenant des extensions (46) qui s'engagent dans des gorges correspondantes (40, 42) formées par des équerres (36, 38) formées sur la paroi transversale (16).

5. Pare-chocs selon l'une ou l'autre des revendications 3 et 4, caractérisé en ce que la chambre additionnelle (34) est agencée dans la région du point de rencontre de la ligne de projection verticale (p) de la région (C) du brin comprimé (12), qui est la plus éloignée du brin tendu (14), avec le brin tendu (14).

6. Pare-chocs pour véhicules, en particulier pour des voitures particulières, comportant un profilé extrudé en alliage de métal léger qui est susceptible d'être fixé sur le véhicule et qui forme un profilé creux conjointement avec des parois profilées (12, 14) agencées à une distance (l) l'une de l'autre sous forme d'un brin comprimé (12) ou d'un brin tendu (14) et avec une paire de parois transversales (16, 18) qui les relient, au moins un voile transversal (20, 22, 24) étant agencé entre les parois transversales (16, 18), lequel relie les deux parois de profilé (12, 14) et subdivise le profilé creux en chambres, et un voile vertical (26) étant agencé entre les parois de profilé (12, 14), lequel relie mutuellement les deux parois transversales (16, 18) et subdivise le profilé creux en une partie déformable primaire (A) comportant des chambres (30) adjacentes au brin comprimé (12), et en une partie déformable secondaire (B) comportant des chambres (32) adjacentes au brin tendu (14), caractérisé en ce que les voiles transversaux (20, 22, 24) sont subdivisés par le voile vertical (26) en voiles partiels (20a, b), et en ce que ces voiles partiels (20a, b) sont décalés d'une valeur (u) sur le voile vertical (26).

7. Pare-chocs selon la revendication 6, caractérisé en ce que le nombre des voiles partiels (20a) dans la partie déformable primaire (A) est supérieur ou inférieur au nombre de voiles partiels (20b) dans la partie déformable secondaire (B).
